# EUROPEAN PATENT SPECIFICATION

(11) **EP 2 646 663 B1**
(45) Date of publication and mention of the grant of the patent: **14.02.2018**
(21) Application number: 11844355.5
(22) Date of filing: 02.12.2011
(51) Int. Cl.: F01N 3/10, F01N 3/20, F01N 9/00

(54) **LEAN BURN ACTIVE IGNITION ENGINE WITH AFTERTREATMENT SYSTEM AND METHOD**
MAGERVERBRENNUNGSMOTOR MIT AKTIVER ZÜNDQUELLE UND NACHBEHANDLUNGSSYSTEM SOWIE VERFAHREN
MOTEUR À ALLUMAGE FONCTIONNANT EN MÉLANGE PAUVRE DOTÉ D'UN SYSTÈME D'APRÈS-TRAITEMENT ET PROCÉDÉ AFFÉRENT

(30) Priority: 03.12.2010 US 419561 P
(43) Date of publication of application: 09.10.2013
(73) Proprietor: Cummins Intellectual Properties, Inc., Minneapolis, Minnesota 55432 (US)
(72) Inventor: YONUSHONIS, Thomas M., Columbus, Indiana 47201 (US); DANE, Marten H., Columbus, Indiana 47203 (US)
(74) Representative: Ridderbusch, Oliver
(86) International application number: PCT/US2011/063136
(87) International publication number: WO 2012/075432

(56) References cited:
- US-A1- 2009 260 349
- US-A1- 2009 272 104
- US-A1- 2009 299 600
- US-A1- 2010 139 248
- US-A1- 2010 139 251
- US-A1- 2010 139 251
- US-A1- 2010 293 929
- US-B1- 6 449 945
- US-B1- 6 574 953
- US-B2- 7 784 451

## Description

### FIELD OF THE INVENTION

The invention relates to a lean burning active ignition engine system, such as a gasoline powered spark-ignition engine system, and more particularly to a lean burning active ignition engine and exhaust aftertreatment system and method of operating the same.

### BACKGROUND

Automotive active ignition internal combustion engines, such as spark-ignition gasoline engines, continue to dominate personal vehicle transportation. However, these types of engines have significantly less fuel efficiency than diesel engines. Current gasoline engines use an oxidation-reduction catalytic converter, for example, a three way catalyst (TWC), which restricts operation to stoichiometric conditions (i.e., at a 14.7:1 air/fuel ratio) to meet nitrogen oxides (NOx), hydrocarbon (HC) and carbon monoxide (CO) standards. At stoichiometric air/gasoline mixture, the TWC provides a reaction function in which NOx is reduced to oxygen and nitrogen, an oxidation reaction in which CO is oxidized to CO₂, and unburnt HC is oxidized to CO₂ and H₂O. By contrast, lean burn diesel engines can operate at much leaner conditions, for example, at about 17:1 to 30:1 air/fuel ratio at full load, and at even higher ratios while idling. However, if a gasoline engine utilizing a TWC were to operate outside of a stoichiometric condition in a lean burn condition, the oxygen content would increase to favor oxidation reactions and reduction of NOx would fall off considerably.

US 2010/139248 A1 and US 2010/0139251 A1 each relate to an engine system comprising an engine and an aftertreatment system. Exhaust gases from the engine are led to an oxidation reduction catalyst (three-way catalytic converter, TWC) and then to a selective catalytic reduction device (SCR device). Subject-matter of US 2009/0260349 A1 is an engine system in which exhaust gases from an engine are forwarded to an aftertreatment system. In some embodiments, the exhaust gases are guided through an oxidation catalyst (three-way catalyst, TWC) and then through an SCR device. In other embodiments, the exhaust gases are guided to either a TWC or an SCR.

### SUMMARY

Subject matter of the present disclosure provides a lean burn active ignition engine system and method of operating a lean burn active ignition engine, which utilize an aftertreatment system including an oxidation-reduction catalyst and a selective catalytic reduction (SCR) catalyst. The engine and method of operation provide a way to increase fuel efficiencies for engine systems utilizing active ignition engines while meeting required or desired emissions criteria.

In one aspect, an engine system includes a lean burning active ignition internal combustion engine and an aftertreatment system. The lean burning active ignition internal combustion engine includes an engine block having plural cylinders, an air handling system including an intake manifold adapted to provide charge air to the cylinders, an exhaust manifold, an active-ignition source, and a fuel injection system, which together with the air handling system is adapted to provide a mixture fuel from the injection system and charge air from the intake manifold such that an air-to-fuel ratio of the charge air/fuel mixture in each of the engine cylinders is substantially greater than a stoichiometric quantity to achieve a lean burn condition. The exhaust gas aftertreatment system is fluidly coupled to an outlet of the exhaust manifold and includes an oxidation-reduction catalyst and a selective catalytic reduction (SCR) catalyst fluidly coupled to the oxidation-reduction catalyst and positioned downstream of the oxidation-reduction catalyst.

Another aspect of the disclosure is a method of operating an engine system including a lean burning active ignition internal combustion engine and an aftertreatment system. The engine includes an engine block including plural cylinders, an intake manifold for providing charge air to the cylinders, an exhaust manifold, and at least one active ignition source for igniting a charge air and fuel mixture in each cylinder. The aftertreatment system includes an oxidation-reduction catalyst and a selective catalytic reduction (SCR) catalyst. The method includes injecting a metered amount of fuel at high pressure into each cylinder of the engine block to mix with charge air in the cylinder such that the air-to-fuel ratio of the mixed charge air and fuel is substantially greater than a stoichiometric quantity to achieve a lean burn condition upon combustion. For each cylinder, the mixed charge air and fuel in the cylinder is combusted by operating the at least one active ignition source. An exhaust gas stream resulting from the combustion in the cylinders is provided though the aftertreatment system including an oxidation-reduction catalyst and a selective catalytic reduction (SCR) catalyst fluidly coupled to the oxidation-reduction catalyst and positioned downstream of the oxidation-reduction catalyst.

In yet another aspect of the disclosure, a method of operating an engine system including a lean burning active ignition internal combustion engine and an aftertreatment system includes providing exhaust gas from the lean burning active ignition internal combustion engine through a three way catalyst (TWC) in the aftertreatment system to produce ammonia during operation of the engine under stoichiometric conditions, and storing the ammonia for additional NOx reduction during lean conditions.

### BRIEF DESCRIPTION OF THE DRAWINGS

FIG. 1 is a diagram of an exemplary engine system 1 including an active ignition internal combustion engine and an aftertreatment system.
FIG. 2 is a diagram of an exemplary aftertreatment system for use in an active ignition internal combustion engine.
FIG. 3 is a diagram of an exemplary aftertreatment system for use in an active ignition internal combustion engine.
FIG. 4 is a diagram showing an exemplary process flow for operating an active ignition internal combustion engine.
FIG. 5 is a diagram showing an exemplary process flow for operating an active ignition internal combustion engine.

### DETAILED DESCRIPTION

Various aspects are described hereafter in connection with exemplary embodiments to facilitate an understanding of the disclosure. However, the disclosure should not be construed as being limited to these embodiments. Rather, these embodiments are provided so that the disclosure will be thorough and complete. Descriptions of well-known functions and constructions may not be provided for clarity and conciseness.

The inventors have realized that significant fuel economy gains can be realized by using an active ignition internal combustion engine (e.g., engines using gasoline, natural gas, ethylene-based fuels) running a lean burn condition with or without turbocharging, supercharging or other boost methodologies. As used herein, the term "active ignition engine," describes an engine in which an action is required to begin combustion of a charge air/ fuel mixture in the cylinder of the engine, such as a spark-ignition (SI) engine, and does not include engines that combust an air/ fuel mixture via compression alone (e.g., a CI or diesel engine). As used herein, the term "active ignition source" is an engine component that carries out an action required for combustion of the air/ fuel mixture and includes, but is not limited to spark plug, plasma, active pre-chamber, and micro-pilot ignition sources. Active ignition engine systems according to embodiments described herein utilize an exhaust aftertreatment strategy that includes an oxidation-reduction catalyst (e.g., a TWC) or a particulate filter with oxidation-reduction catalytic functions, and a selective catalytic reduction (SCR).

SCR catalysts (sometimes referred to herein as "SCR") currently are used in diesel aftertreatment systems. The SCR is typically fluidly connected to a diesel oxidation catalyst (DOC) and positioned downstream of the DOC with a diesel particulate filter (DPF) provided between the SCR and DOC. The SCR requires a reductant dosing system, such as a diesel emissions fluid (DEF) dosing system, which is provided upstream of the SCR to inject a reductant such as anhydrous NH₃ aqueous NH₃, or most often a precursor that is convertible to NH₃ such as urea ammonia or urea, into the exhaust flow. The reductant dosing system can include a doser, a decomposition reactor, and a mixer. The reductant is adsorbed onto a catalyst surface in the SCR where it is used to convert the NOx emissions in the exhaust gas flow to nitrogen and water, and in the case of urea, also into carbon dioxide.

Urea SCR systems are becoming commonplace in diesel engines to control NOx under lean burn conditions. At the same time, delivery infrastructures have been developing to meet the increasing demand for SCR reductants, such as in Europe, where the urea distribution network is gradually becoming mature. In North America, although a urea infrastructure remains rather sparse, use of urea SCR systems for diesel engines will eventually drive increases in availability of urea for its consumers as well. Also, because urea can be manufactured from natural gas, embodiments consistent with the disclosure can increase engine fuel efficiency for gasoline (a precious resource) while utilizing natural gas resources to extend the fuel efficiency of a gasoline engine.

The inventors have recognized that use of an oxidation-reduction catalyst, such as a TWC device or system, coupled with a urea SCR system can significantly extend the operational range and can greatly increase the fuel economy of an active ignition engine. It is also envisioned that HC traps, NOx traps, particulate filters and other emission devices can be coupled with SCR systems implemented with active ignition engines. However, the use of a TWC in a active ignition engine aftertreatment system has prevented the application and adoption of SCR systems in these engine platforms. Embodiments consistent with the present disclosure address these concerns and allow for improving the performance and efficiency of a gasoline engine at lean burn conditions.

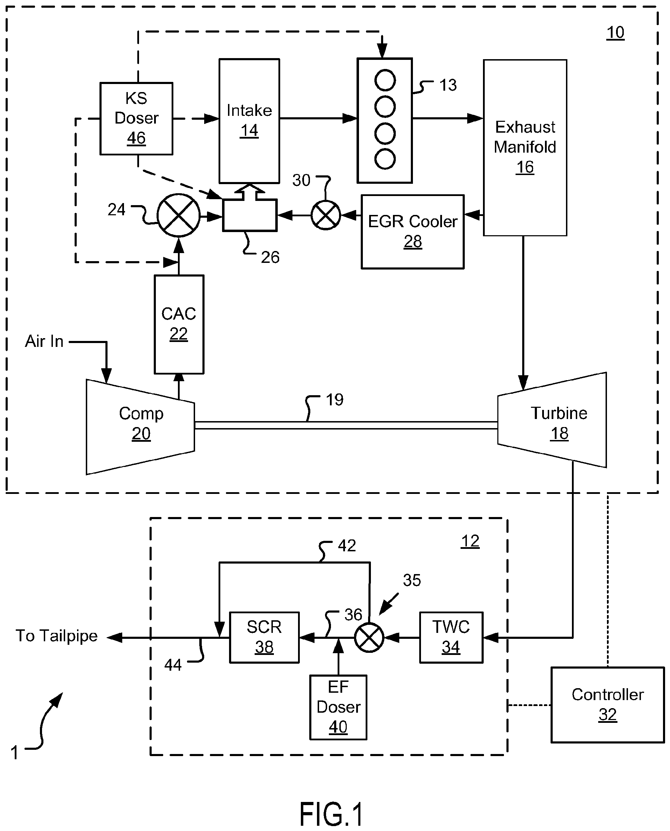

Figure 1 shows an engine system 1 according to an exemplary embodiment. System 1 includes an active ignition internal combustion engine 10, which can be a gasoline engine, and an aftertreatment system 12 fluidly connected to the exhaust stream downstream from the engine. The active ignition internal combustion engine 10 includes an engine block 13 having plural cylinders, an intake manifold 14 for supplying charge air to the cylinders of the engine block 13, and an exhaust manifold 16 for channeling exhaust gasses from the cylinders of the engine block 13. Each cylinder has an active ignition source, such as a spark plug (not shown), which ignites a charge of air-fuel mixture in the cylinder in accordance with an angle relative to piston position in the cylinder and crankshaft angular velocity such that a spark will occur in the combustion chamber near the end of the compression stroke. The intake manifold 14 and exhaust manifold 16 are connected to the engine block 13, but are depicted as separated from the engine in Figure 1 for ease of illustrating other system elements.

The active ignition internal combustion engine 10 includes an energy conversion device that converts energy from the exhaust stream to energy that compresses ambient air for the intake charge air. In the embodiment depicted in FIG. 1, the energy conversion device is a turbocharger including a turbine 18 that is fluidly connected to the exhaust manifold 16 such that the exhaust gas traversing the turbine 18 turns the turbine, although a supercharger or other energy conversion device can be used. The turbine 18 can be, for example, a wastegate (WG) or variable geometry (VG) type turbine and is connected to a mechanical coupling 19, such as a shaft, which turns a compressor 20 to compress air for intake charge air. Compressed air that exits the compressor 20 can be cooled by a charge air cooler (CAC) 22 provided in-line between the outlet of the compressor 20 and the air intake manifold 14 of the engine 13. The charge air cooler 22 has an inlet fluidly coupled to the outlet of the compressor 20 and an outlet fluidly coupled to the air intake manifold 14. The CAC 22 can be configured in a conventional manner to cool air flowing from the outlet of the compressor 20 to the intake manifold 14 via a throttle 24 that controls the flow of the cooled air based on a requested or set torque or power. The throttle 24 together with any of the other components described above involved with charge air are part of an air handing system of the active ignition internal combustion engine 10.

The exhaust manifold 16 has an outlet for supplying exhaust gas recirculation (EGR) gas to a mixer 26, where the cooled intake compressed air and the EGR gas mix before being provided to the intake manifold. The EGR gas can be cooled as it passes through an EGR cooler 28 and an amount of EGR gas entering the mixer can be controlled by an EGR valve 30, although any portion or all of the EGR gas can bypass cooler 28 via a bypass passage (not shown) based on an EGR temperature associated with an operating point. EGR cooler 28 can utilize liquid coolant (e.g., water) and/or air to remove heat from the recycled exhaust gas.

A controller 32 depicted in FIG. 1, which can be an electronic control unit (ECU) or electronic control module (ECM), for example, that monitors and controls the performance of the active ignition internal combustion engine 10, the aftertreatment system 12, and other elements of the vehicle. The controller 32 can be a single unit or plural control units that collectively perform these monitoring and control functions of the active ignition internal combustion engine 10 and aftertreatment system 12.

The controller 32 can be provided separate from the coolant systems and communicate electrically with systems via one or more data and/or power paths. The control module can also utilize sensors, such as pressure, temperature sensors to monitor the system components and determine whether these systems are functioning properly. The control module can generate control signals based on multiple inputs including information provided by sensors and user inputs, and perhaps other information, for example, stored in a database or memory integral to or separate from the control module. The inputs are processed by the controller 32 using various algorithms, modules, stored data, and other input to update the stored data and/or generate output values and/or commands.

The controller 32 can include one or more processors, such as a microprocessor, and modules in the form of software or routines that are stored on computer readable media such as memory, which are executable by the one or more processors of the controller 32. In alternative embodiments, modules of control module can include electronic circuits for performing some or all or part of the processing, including analog and/or digital circuitry.

The modules can comprise a combination of software, electronic circuits and microprocessor based components. The control module can receive data indicative of engine performance and exhaust gas composition including, but not limited to engine position sensor data, engine speed sensor data, vehicle speed data, exhaust mass flow sensor data, fuel rate data, pressure sensor data and temperature sensor data from locations throughout the gasoline engine 10, the exhaust aftertreatment system 12, data regarding requested power, and other data. The controller 32 can then generate control signals and output these signals to control the fuel injectors of a high pressure fuel system (not shown) to inject a metered amount of fuel ether directly into the engine cylinders or indirectly (e.g., into the intake manifold 14) to operate within either a lean burn condition, a stoichiometric condition, or a rich condition, depending on the engine load or other conditions, while achieving desired or required exhaust gas emissions.

As shown in FIG. 1, exhaust gas from the turbine 18 of the active ignition internal combustion engine 10 is supplied to the exhaust aftertreatment system 12 including a TWC 34, although another oxidation-reduction catalyst or other oxidation catalyst (e.g., a light-off catalyst) can be used. The aftertreatment system 12 includes an SCR bypass valve 35, a first passage 36 including an SCR 38, a second passage 42 that bypasses the first passage 36, and a tailpipe passage 44. The emissions fluid metered by emissions doser 40 can be aqueous urea or ammonia solution, or another reductant capable of reducing NOx in the exhaust stream. The bypass valve 35 is controlled via controller 32 to supply exhaust gas either through the first passage 36 fluidly connected to the SCR 38 and emissions fluid doser 40, or though a passage 42 that bypasses the SCR catalyst 38 and the emissions fluid doser 40 and combines with the tailpipe passage 44. In an embodiment, an actuator (not shown) controls the extent that the bypass valve 35 is opened via controller 32 to divert predetermined fractional amounts of exhaust flow provided from TWC 34 into the second (bypass) passage 42.

During operation, the controller 32 receives a request for engine speed and torque (or fueling) and determines, from sensor feedback and stored data such as an engine operation table or map, a mode of operation the engine system 1. The controller 32 includes modules for controlling the reduction of NOx by controlling the operation of the SCR 38 in response to the exhaust output of the engine system 10 in various modes of operation. For example, engines operating in a highway driving condition or steady state condition can be considered to be in cruise mode in which the engine system 10 operates in a substantially lean burn condition. Engines operating in a city driving conditions with frequent stops and starts would experience transient modes of operation. When an engine is first started, it enters a warm up mode in which temperatures are not sufficient to operate the SCR catalyst 38. The operation of the aftertreatment system 12 and the gasoline engine 10 is generally different according to modes, and can vary significantly within a single mode.

In the cruise mode or during another lean burn operating condition, the aftertreatment TWC 34 fluidly couples with the SCR catalyst 38, for example, via operation of the valve 35 or other fluid connection. In such modes of operation, the TWC 34 acts as an oxidation catalyst for the SCR 38 to convert portions of NOx to the proper molar ratio, i.e., the NO₂ to NO ratio, to achieve high NOx conversion in the SCR 38. The TWC 34 also can include NOx storage capabilities to release NOx after heat up of the catalyst of the SCR 38. For example, the TWC 34 can include a NOx trap or NOx adsorber system, such as using a base metal oxide system, to store NOx for short periods of time.

Controller 32 monitors plural conditions of the gasoline engine 10 and requests for power, and is adapted to communicate a signal to the fuel injection system of the gasoline engine 10 in response to the monitored conditions and/or the request for power. If the engine load associated with the requested power is less than a predetermined threshold value, the signal causes throttle 24 to move in a more open position to increase the amount of charge air such that the engine operates at a lean burn condition. If the engine load associated with the requested power is greater than or equal to the predetermined threshold value, the signal causes the throttle 24 to move to a more closed position to decrease an amount of air such that the engine operates substantially at a stoichiometric condition.

The valve 35 is controlled via controller 32 and fluidly connected downstream from the oxidation catalyst, said valve controllable to route the exhaust gas through the SCR under said light load with the engine operating in said lean burn condition, and to route the exhaust gas to bypass the SCR with the engine operating in said stoichiometric condition.

In a warm up mode, when the gasoline engine 10 is first started, a lean condition cannot be obtained immediately to run the SCR 38 due to insufficiently high temperatures. At this time, before the SCR 38 is turned on, the TWC 34 can be used to store NOx and use the traditional TWC function during engine accelerations until cruise conditions or favorable operational conditions for the SCR system are obtained. It is also possible to use an oxidation catalyst (e.g., a light-off catalyst) to store NOx or a particulate filter with oxidation or TWC conversion functions. The gasoline engine 10 is operated in a lean burn condition with a TWC for initial launch and then transitions to the SCR 38 at cruise and other light load conditions once the engine system 1 has warmed up. An ammonia or urea based SCR system has the capability of reducing NOx under oxidizing conditions, which is not possible with a TWC.

Because lean burning conditions in a active ignition engine, such as those similar to diesel engines (e.g., an air-to-fuel ratio of around 20:1), can raise temperatures within components of the active ignition engine 10 and the exhaust stream, parts of the engine system 1 can be damaged or inefficient operation of the gasoline engine 10 or aftertreatment system 12 can result. Such high temperature lean burn conditions increase susceptibility to engine knocking. In an embodiment, knocking at light loads is controlled by direct fuel (e.g., gasoline) injection at the intake or cylinder, and at high loads, high rates of cooled EGR and/or water or alcohol injection is used to suppress knock. In an embodiment, the controller 32 can determine when a knock condition will occur and utilize a knock suppressant (KS) doser at the intake manifold side of the active ignition engine 10 to suppress knock and/or extend operational range of the engine.

As shown in FIG. 1, a KS doser 46 injects a substance into the charge air gas, for example, into the compressed air output from the compressor 20, into the compressed charge air and EGR mixture in the mixer 26, into the gasoline and/or compressed charge air in the intake 14, and/or into the cylinders in the engine block 13 (e.g., from the cylinder head), at a quantity sufficient to reduce engine operating temperature when operating in the above lean burn condition. For example, KS doser 46 can inject a fluid such as alcohol (ethanol or other alcohol species), water, excess gasoline, and/or high levels of EGR into the intake charge to suppress knock and control and regulate component temperature.

EGR control also can assist in controlling temperature during lean operation of the gasoline engine system 10. As pointed out above, FIG. 1 shows an exemplary EGR valve 30 that can be controlled to adjust the flow rate of the EGR gas towards the intake side of the engine. In an embodiment, the EGR valve 30 can be adjusted via a computer controlled actuator to provide to the mixer 26 a proper rate of EGR gas based on the operating conditions, requested power, and a target temperature, and thus provide high enough EGR rates at high boost while running gasoline lean to maintain operation at or below the target temperature.

To further assist controlling temperature, the EGR gas can be cooled by the EGR cooler 28. Additionally, the KS doser 46 can be provided to inject alcohol and/or water or other knock reducing fluid into the intake before the charge is provided to the cylinders of the engine 12. During transitions, such as accelerations, where lean conditions can result in issues, the controller 32 (e.g., an ECU/ECM) that monitors the performance of the gasoline engine 10 and other elements of the vehicle, can provide higher rates of EGR and or supplemental fuels to reduce knock and maintain acceptable operation.

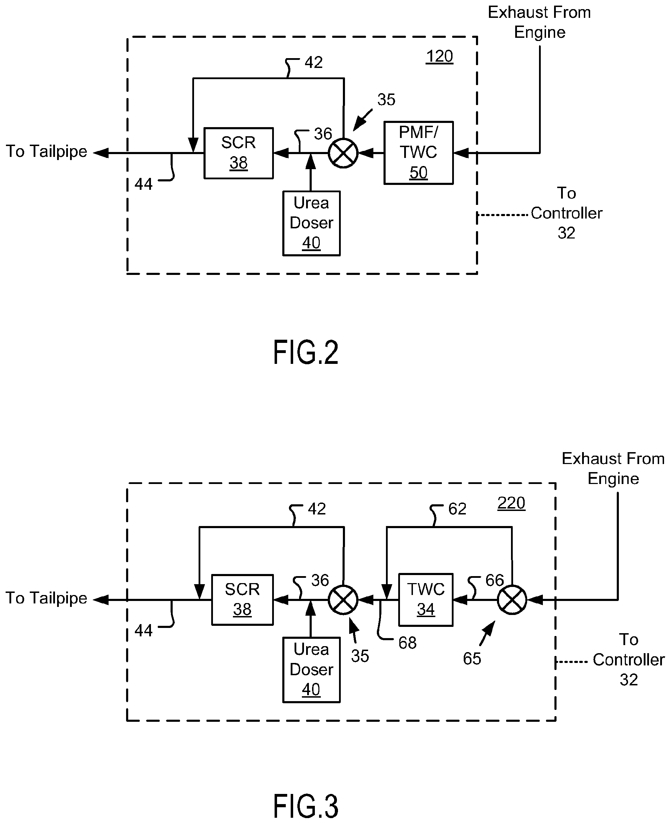

Figure 2 shows an aftertreatment system 120 according to an exemplary embodiment. Aftertreatment system 120 can receive the exhaust stream from an active ignition internal combustion engine fluidly connected upstream of the aftertreatment system, for example, from the turbine 18 as shown in FIG. 1. Aftertreatment system 120 is essentially the same as the aftertreatment system 12 described above with respect to Figure 1 except that it includes a particulate matter filter (PMF) 50 containing a TWC function in place of the TWC element. Excess fuel (e.g., gasoline) can be burned under essentially steady state and idle conditions. For example, under stoichiometric conditions. After reaching temperatures in the catalyst system at which the SCR catalyst 38 effectively reduces NOx, using a high energy ignition and direct injection, the active ignition engine 10 can run leaner than what is normally required for a TWC.

FIG. 3 shows an aftertreatment system 220 according to an exemplary embodiment. Aftertreatment system 220 can be fluidly connected to receive the exhaust stream from gasoline engine 10 shown in FIG. 1 and is essentially the same as the aftertreatment system 12 described above with respect to Figure 1 except that it includes a bypass passage 62 across the TWC 34. A bypass valve 65 can be controlled via controller 32 to cause to the exhaust stream to flow from an outlet of the bypass valve 65 through the passage 66 fluidly connecting bypass valve 65 to TWC 34, or to flow from a second outlet of the bypass valve 65 though passage 62 bypassing TWC 34 and fluidly connecting with an exhaust flow passage 68 fluidly connecting TWC 34 and SCR bypass valve 35. In this embodiment, an actuator (not shown) controlling an extent to which the bypass valve 65 is opened can be operated via controller 32 to divert pass all or a fractional amount of the exhaust stream provided from the turbine 18 towards the TWC 34 into the bypass passage 62. This can result in significant fuel savings because the engine would be running lean while bypassing the TWC and during no bypass the engine would be running at stoichiometric ratio. During transitory operation, where a knock limit can be encountered, there are options of lowering temperatures by other fuels or switching back to the TWC 34.

It may not be desirable or necessary during some operating conditions to bypass TWC 34 because the TWC 34 can produce NH₃. As a result, during stoichiometric operation it is possible to store NH₃ made by the TWC 34. The stored NH₃ can then be used to contribute to reducing NOx. In an embodiment, a TWC can produce NH₃ during operation at stoichiometric conditions and the NH₃ can be stored for additional NOx reduction during lean conditions. Other embodiments can utilize the bypass passage 62 as across TWC 34 to avoid releasing NH₃ or NOx that is stored on the SCR 38.

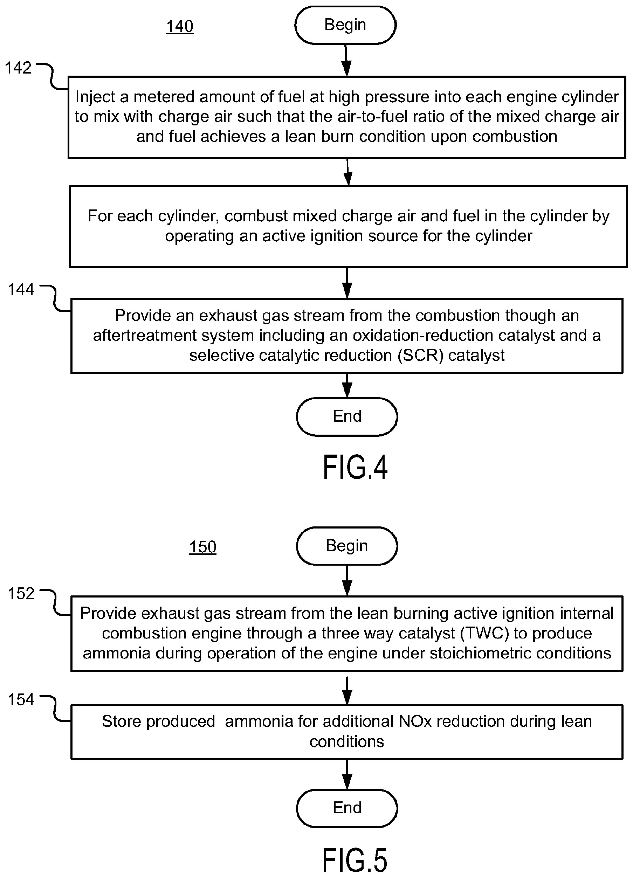

With reference to FIG. 4, an exemplary method 140 of operating an active ignition internal combustion engine will now be described. Method 140 begins with process 142 in which a metered amount of fuel is injected at high pressure into each of the engine cylinders of the engine to mix with charge air provided in each of the engine cylinders from an intake manifold of the engine, such that the air-to-fuel ratio of the mixed charge air and fuel in each cylinder is substantially greater than a stoichiometric quantity to achieve a lean burn condition. In process 144, for each cylinder, the mixed charge air and fuel in the cylinder is combusted by operating an active ignition source for that cylinder. The timing of the ignition is a function of the position of a piston in the cylinder and the relative position of the crankshaft, and can be different at different operating points. In process 146, the exhaust gas stream from the combustion is provided to the exhaust manifold of the engine and flow though an aftertreatment system including an oxidation-reduction catalyst and a selective catalytic reduction (SCR) catalyst downstream of the oxidation-reduction catalyst. To extend the operational range of the active ignition engine and protect system components from high temperatures, the method can also include injecting a knock suppressant into the charge at a quantity sufficient to reduce engine operating temperature during said lean burn condition. While not shown in process 140, a method of operating an active ignition engine can include a step of converting energy of the exhaust gas stream from the exhaust manifold to compress ambient air, for example, using a turbocharger or supercharger, if a higher density charge is desired.

FIG. 5 is a diagram of an exemplary method 150 of operating an engine system including a lean burning active ignition internal combustion engine and aftertreatment system according to another aspect of the disclosure. More specifically, method 150 takes advantage of reductant produced in the oxidation-reducing catalyst by storing the reductant for later use. Starting in process 152, exhaust gas from the lean burning active ignition internal combustion engine is flown through a three way catalyst (TWC) in the aftertreatment system to produce ammonia during operation of the engine under stoichiometric conditions. Next, process 154 stores ammonia produced in the TWC for additional NOx reduction during lean conditions. For example, the exhaust gas can be flown into an SCR catalyst downstream of the TWC, where said ammonia storage takes place.

Embodiments of the lean burn active ignition engine with coupled SCR system can be implemented in a variety of applications, including a hybrid electric system to achieve greater fuel efficiency than current systems while meeting desired or required level of emissions.

It will be apparent to those skilled in the art that various changes and modifications can be made to the lean burn active ignition engine with aftertreatment system architecture described herein without departing from the scope of the disclosure.

## Claims

1. An engine system (1), comprising:
a lean burning active ignition internal combustion engine (10), comprising:
an engine block (13) including plural cylinders;
an air handling system including an intake manifold (14) adapted to provide charge air to the cylinders;
an exhaust manifold (16);
an active ignition source; and
a fuel injection system, which together with the air handling system is adapted to provide a mixture fuel from the injection system and charge air from the intake manifold (14) such that an air-to-fuel ratio of the charge air/fuel mixture in each of the engine cylinders is substantially greater than a stoichiometric quantity to achieve a lean burn condition; and
an exhaust gas aftertreatment system (12; 120; 220) fluidly coupled to an outlet of the exhaust manifold (16), said aftertreatment system (12; 120; 220) including:
an oxidation-reduction catalyst (34);
a selective catalytic reduction (SCR) catalyst (38) fluidly coupled to the oxidation-reduction catalyst (34) and positioned downstream of the oxidation-reduction catalyst (34);
**characterized in that**
the engine system (1) further comprises:
a first bypass valve (65) fluidly connected upstream of the oxidation-reduction catalyst (34), the first bypass valve (65) controllable to route exhaust gas to bypass the oxidation-reduction catalyst (34), at least in part, under the lean burn condition; and
a second bypass valve (35) fluidly connected downstream of the oxidation-reduction catalyst (34) and upstream of the selective catalytic reduction catalyst (38), the second bypass valve (35) controllable to route the exhaust gas to bypass the selective catalytic reduction catalyst (38), at least in part, under a stoichiometric operating condition.

2. The engine system (1) of claim 1, further comprising an energy conversion device (18) fluidly connected to an outlet of the exhaust manifold (16) and adapted to convert energy of an exhaust stream from the exhaust manifold (16) to compress ambient air for said charge air.

3. The engine system (1) of claim 2, wherein the energy conversion device (18) is a turbocharger including a turbine (18) fluidly connected to an outlet of the exhaust manifold (16) and adapted to tum with an exhaust stream from the exhaust manifold (16), and a compressor (20) mechanically linked to the turbine (18) and configured to provide the compressed ambient air with the turbine (18) turning.

4. The engine system (1) of claim 1, further comprising a knock suppressant doser (46) provided at the intake side of the engine block (13), said knock suppressant doser (46) adapted to inject a knock suppressant into the charge at a quantity sufficient to reduce engine operating temperature with said lean bum condition.

5. The engine system (1) of claim 4, wherein the knock suppressant is at least one of exhaust gas recirculation (EGR) gas, alcohol, fuel or water.

6. The engine system (1) of claim 1, wherein the fuel injection system is one of direct injection or port fuel injection system.

7. The engine system (1) of claim 1, wherein the oxidation-reduction catalyst (34) is a three-way catalyst (34).

8. The engine system (1) of claim 1, further comprising a particulate filter (50), wherein the oxidation-reduction catalyst (34) is integrated with the particulate filter (50).

9. The engine system (1) of claim 1, further comprising a controller (32) monitoring plural conditions of the engine (10) and requests for power and adapted to communicate a signal to the fuel injection system in response to said monitored conditions and/or said request for power, said signal indicating to inject a quantity of fuel such that that the engine (10) operates at a lean burn condition when the engine load is less than a predetermined threshold, and said signal indicating to inject a quantity of fuel such that the engine (10) operates substantially at a stoichiometric condition when the engine load is greater than the predetermined threshold.

10. A method of operating an engine system (1) including a lean burning active ignition internal combustion engine (10) and an aftertreatment system (12; 120; 220), said engine (10) including an engine block (13) including plural cylinders, an intake manifold (14) for providing charge air to the cylinders, an exhaust manifold (16), and at least one active ignition source for igniting a charge air and fuel mixture in each cylinder, and said aftertreatment system (12; 120; 220) including an oxidation-reduction catalyst (34) and a selective catalytic reduction (SCR) catalyst (38), comprising:
injecting a metered amount of fuel at high pressure into each cylinder of the engine block (13) to mix with charge air in the cylinder such that the air-to-fuel ratio of the mixed charge air and fuel is substantially greater than a stoichiometric quantity to achieve a lean bum condition upon combustion;
for each cylinder, combusting the mixed charge air and fuel in the cylinder by operating the at least one active ignition source;
providing an exhaust gas stream resulting from said combustion though the aftertreatment system (12; 120; 220) including the oxidation-reduction catalyst (34) and the selective catalytic reduction (SCR) catalyst (38) fluidly coupled to the oxidation-reduction catalyst (34) and positioned downstream of the oxidation-reduction catalyst (34);
**characterized by**
providing, via a first valve (65) positioned upstream of the oxidation-reduction catalyst (34), at least some of the exhaust gas to bypass the oxidation-reduction catalyst (34) if the engine (10) is operating in the lean burn condition; and
providing, via a second valve (35) positioned upstream of the selective catalytic reduction catalyst (38), the exhaust gas to bypass the selective catalytic reduction catalyst (38) if the engine (10) is operating in a stoichiometric condition.

11. The method of operating a lean burning active ignition internal combustion engine (10) according to claim 10, further comprising converting energy of the exhaust gas stream to compress ambient air for said charge air.

12. The method of operating a lean burning active ignition internal combustion engine (10) according to claim 10, further comprising injecting a knock suppressant into the charge at a quantity sufficient to reduce engine operating temperature during said lean burn condition.

13. The method of operating a lean burning active ignition internal combustion engine (10) according to claim 12, wherein the step of injecting the knock suppressant includes monitoring plural conditions of the engine (10) and requests for power, and determining whether a current or requested operating condition is a lean burn operating condition at which an operating temperature would cause engine knock.

14. The method of operating a lean burning active ignition internal combustion engine (10) according to claim 12, wherein the knock suppressant is at least one of exhaust gas recirculation (EGR) gas, alcohol, fuel or water.

15. The method of operating a lean burning active ignition internal combustion engine (10) according to claim 10, wherein one of direct injection system or port fuel injection system injects the metered amount of fuel.

16. The method of operating a lean burning active ignition internal combustion engine (10) according to claim 10, wherein the oxidation-reduction catalyst (34) is a three-way catalyst.

17. The method of operating a lean burning active ignition internal combustion engine (10) according to claim 10, further comprising filtering particulate matter from the exhaust stream in the aftertreatment system (12; 120; 220).

18. The method of operating a lean burning active ignition internal combustion engine (10) according to claim 10, further comprising:
monitoring plural conditions of the engine (10) and requests for power;
communicating a signal to a fuel injection system injecting said metered amount of fuel, said signal based on said monitored conditions and/or said request for power; and
if the engine load is less than a predetermined threshold, indicating in the signal to inject a quantity of fuel such that that the engine (10) operates at a lean burn condition; and
if the engine load is greater than or equal to the predetermined threshold, indicating in the signal to inject a quantity of fuel such that that the engine (10) operates substantially at a stoichiometric condition.

19. A method of operating an engine system (1) including a lean burning active ignition internal combustion engine (10) and an aftertreatment system (12; 120; 220), comprising:
providing exhaust gas from the lean burning active ignition internal combustion engine (10) through a three way catalyst (TWC) (34) in the aftertreatment system (12; 120; 220) to produce ammonia during operation of the engine (10) under stoichiometric conditions;
storing the ammonia for additional NOx reduction during lean conditions;
providing the exhaust gas through a selective catalytic reduction catalyst (38) downstream of the TWC (34), where said ammonia storage takes place;
**characterized by**
providing, via a first valve (65) positioned upstream of the TWC (34), at least some of the exhaust gas to bypass the TWC (34) if the engine (10) is operating in a lean burn condition; and
providing, via a second valve (35) positioned upstream of the selective catalytic reduction catalyst (38), at least some of the exhaust gas to bypass the selective catalytic reduction catalyst (38) if the engine (10) is operating in the stoichiometric condition.

## Patentansprüche

1. Motorsystem (1), umfassend:
einen Magermotor (10) mit aktiver Zündung, umfassend:
einen Motorblock (13) mit mehreren Zylindern;
ein Lufthandhabungssystem mit einem Ansaugkrümmer (14), der zum Versorgen der Zylinder mit Ladeluft eingerichtet ist;
einen Abgaskrümmer (16);
eine aktive Zündungsquelle; und
ein Kraftstoffeinspritzsystem, welches zusammen mit dem Lufthandhabungssystem dazu eingerichtet ist, eine Mischung aus Kraftstoff von dem Einspritzsystem und Ladeluft von dem Ansaugkrümmer (14) bereitzustellen, so dass ein Luft-zu-Kraftstoff-Verhältnis der Ladeluft/Kraftstoff-Mischung in jedem der Zylinder des Motors im Wesentlichen größer ist als eine stöchiometrische Größe zum Erreichen eines Magerverbrennungszustands; und
ein Abgasnachbehandlungssystem (12; 120; 220), welches fluidmäßig gekoppelt ist mit einem Auslass des Abgaskrümmers (16), wobei das Nachbehandlungssystem (12; 120; 220) umfasst:
einen Oxidation-Reduktion-Katalysator (34);
einen Katalysator zur selektiven katalytischen Reduktion (SCR) (38), der mit dem Oxidation-Reduktion-Katalysator (34) fluidmäßig gekoppelt ist und stromabwärts von dem Oxidation-Reduktion-Katalysator (34) angeordnet ist;
**dadurch gekennzeichnet, dass**
das Motorsystem (1) außerdem umfasst:
ein erstes Umgehungsventil (65), das stromaufwärts von dem Oxidation-Reduktion-Katalysator (34) fluidmäßig verbunden ist, wobei das erste Umgehungsventil (65) dazu steuerbar ist, Abgas so zu leiten, dass es bei dem Magerverbrennungszustand den Oxidation-Reduktion-Katalysator (34) zumindest teilweise umgeht; und
ein zweites Umgehungsventil (35), das stromabwärts von dem Oxidation-Reduktion-Katalysator (34) und stromaufwärts von dem Katalysator zur selektiven katalytischen Reduktion (38) fluidmäßig verbunden ist, wobei das zweite Umgehungsventil (35) dazu steuerbar ist, das Abgas so zu leiten, dass es bei einem stöchiometrischen Verbrennungszustand den Katalysator zur selektiven katalytischen Reduktion (38) zumindest teilweise umgeht.

2. Motorsystem (1) nach Anspruch 1, welches weiterhin eine Energieumwandlungsvorrichtung (18) umfasst, welche mit einem Auslass des Abgaskrümmers (16) verbunden ist und dazu eingerichtet ist, Energie eines Abgasstroms von dem Abgaskrümmer (16) zu konvertieren, um Umgebungsluft als die genannte Ladungsluft zu komprimieren.

3. Motorsystem (1) nach Anspruch 2, wobei die Energieumwandlungsvorrichtung (18) ein Turbolader ist, welcher eine Turbine (18), die mit einem Auslass des Abgaskrümmers (16) fluidmäßig verbunden und dazu eingerichtet ist, sich durch einen Abgasstrom vom Abgaskrümmer (16) zu drehen, und einen Kompressor (20) umfasst, welcher mechanisch mit der Turbine (18) verbunden und dazu eingerichtet ist, die komprimierte Umgebungsluft bei Drehung der Turbine (18) bereitzustellen.

4. Motorsystem (1) nach Anspruch 1, welches weiterhin einen Dosierer (46) zur Klopfunterdrückung umfasst, welcher an der Ansaugseite des Motorblocks (13) vorgesehen ist, wobei der Dosierer (46) zur Klopfunterdrückung dazu eingerichtet ist, in die Ladeluft einen Klopfunterdrücker in einer Menge einzuspritzen, welche ausreicht, um die Motorbetriebstemperatur bei dem Magerverbrennungszustand zu verringern.

5. Motorsystem (1) nach Anspruch 4, wobei der Klopfunterdrücker zumindest eines ist aus: einem Abgasrückführungs- (AGR-)Gas, Alkohol, Kraftstoff oder Wasser.

6. Motorsystem (1) nach Anspruch 1, wobei das Kraftstoffeinspritzsystem ein Direkteinspritzungssystem oder ein Saugrohr-Kraftstoffeinspritzsystem ist.

7. Motorsystem (1) nach Anspruch 1, wobei der Oxidation-Reduktion-Katalysator (34) ein Dreiwege-Katalysator (34) ist.

8. Motorsystem (1) nach Anspruch 1, welches weiterhin einen Partikelfilter (50) umfasst, wobei der Oxidation-Reduktion-Katalysator (34) in den Partikelfilter (50) integriert ist.

9. Motorsystem (1) nach Anspruch 1, welches weiterhin eine Steuereinheit (32) zum Überwachen mehrerer Zustände des Motors (10) und Leistungsanfragen umfasst, und wobei die Steuereinheit (32) eingerichtet ist, auf den überwachten Zustand und/oder die überwachte Leistungsanfrage hin ein Signal an das Kraftstoffeinspritzsystem zu kommunizieren, wobei dieses Signal angibt, eine Kraftstoffmenge so zu injizieren, dass der Motor (10) in einem Magerverbrennungsbetrieb arbeitet, wenn die Motorlast kleiner ist als ein vorbestimmter Grenzwert, und dieses Signal angibt, eine Kraftstoffmenge so zu injizieren, dass der Motor (10) im Wesentlichen in einem stöchiometrischen Zustand arbeitet, wenn die Motorlast größer ist als der vorbestimmte Grenzwert.

10. Verfahren zum Betreiben eines Motorsystems (1), welches einen Magermotor (10) mit aktiver Zündung und ein Abgasnachbehandlungssystem (12; 120; 220) umfasst, wobei der Motor (10) einen Motorblock (13) mit mehreren Zylindern, einen Ansaugkrümmer (14) zum Versorgen der Zylinder mit Ladeluft, einen Abgaskrümmer (16) und mindestens eine aktive Zündungsquelle zum Entzünden eines Gemisches von Ladeluft und Kraftstoff in jedem Zylinder umfasst, und wobei das Abgasnachbehandlungssystem (12; 120; 220) einen Oxidation-Reduktion-Katalysator (34) und einen Katalysator zur selektiven katalytischen Reduktion (SCR) (38) umfasst,
umfassend:
Einspritzen einer dosierten Kraftstoffmenge unter Hochdruck in jeden Zylinder des Motorblocks (13) zum Mischen mit Ladeluft in den Zylindern, so dass das Luft-zu-Kraftstoff-Verhältnis der mit Kraftstoff vermischten Ladeluft im Wesentlichen größer ist als eine stöchiometrische Größe zum Erreichen eines Magerverbrennungszustands beim Verbrennen;
Verbrennen der mit Kraftstoff vermischten Ladeluft in dem Zylinder durch Betreiben der mindestens einen aktiven Zündungsquelle;
Zuführen eines Abgasstroms, der aus der genannten Verbrennung resultiert, durch das Abgasnachbehandlungssystem (12; 120; 220), welches den Oxidation-Reduktion-Katalysator (34) und den Katalysator zur selektiven katalytischen Reduktion (SCR) (38) umfasst, welcher fluidmäßig mit dem Oxidation-Reduktion-Katalysator (34) verbunden und stromabwärts zu dem Oxidation-Reduktion-Katalysator (34) angeordnet ist;
**gekennzeichnet durch**
Vorsehen, dass zumindest ein Teil des Abgases den Oxidation-Reduktion-Katalysator (34) umgeht, wenn der Motor (10) in dem Magerverbrennungszustand arbeitet, **durch** ein erstes Umgehungsventil (65), das stromaufwärts von dem Oxidation-Reduktion-Katalysator (34) angeordnet ist; und
Vorsehen, dass das Abgas den Katalysator zur selektiven katalytischen Reduktion (38) umgeht, wenn der Motor (10) in einem stöchiometrischen Zustand arbeitet, **durch** ein zweites Umgehungsventil (35), das stromaufwärts von dem Katalysator zur selektiven katalytischen Reduktion (38) angeordnet ist.

11. Verfahren zum Betreiben eines Magermotors (10) mit aktiver Zündung nach Anspruch 10, welches weiterhin ein Umwandeln von Energie des Abgasstroms zum Verdichten von Umgebungsluft als Ladeluft umfasst.

12. Verfahren zum Betreiben eines Magermotors (10) mit aktiver Zündung nach Anspruch 10, welches weiterhin ein Einspritzen eines Klopfunterdrückers in die Ladeluft in einer Menge umfasst, die ausreicht, um eine Motorbetriebstemperatur während dem Magerverbrennungszustand zu reduzieren.

13. Verfahren zum Betreiben eines Magermotors (10) mit aktiver Zündung nach Anspruch 12, wobei der Schritt des Einspritzens des Klopfunterdrückers umfasst: ein Überwachen von mehreren Zuständen des Motors (10) und von Leistungsanfragen, sowie ein Bestimmen, ob ein momentaner oder angefragter Betriebszustand ein Magerverbrennungsbetriebszustand ist, bei welchem eine Betriebstemperatur ein Motorklopfen verursachen würde.

14. Verfahren zum Betreiben eines Magermotors (10) mit aktiver Zündung nach Anspruch 12, wobei der Klopfunterdrücker eines ist aus: einem Abgasrückführungs-(AGR-)Gas, Alkohol, Kraftstoff oder Wasser.

15. Verfahren zum Betreiben eines Magermotors (10) mit aktiver Zündung nach Anspruch 10, wobei ein Direkteinspritzungssystem oder ein Saugrohr-Kraftstoffeinspritzsystem die dosierte Kraftstoffmenge einspritzt.

16. Verfahren zum Betreiben eines Magermotors (10) mit aktiver Zündung nach Anspruch 10, wobei der Oxidation-Reduktion-Katalysator (34) ein Dreiwege-Katalysator (34) ist.

17. Verfahren zum Betreiben eines Magermotors (10) mit aktiver Zündung nach Anspruch 10, welches weiterhin ein Filtern von Partikeln aus dem Abgasstrom in dem Abgasnachbehandlungssystem (12; 120; 220) umfasst.

18. Verfahren zum Betreiben eines Magermotors (10) mit aktiver Zündung nach Anspruch 10, welches weiterhin umfasst:
Überwachen von mehreren Zuständen des Motors (10) und von Leistungsanfragen;
Kommunizieren eines Signals an ein Kraftstoffeinspritzsystem, das die genannte dosierte Kraftstoffmenge einspritzt, wobei das genannte Signal auf dem überwachten Zustand und/oder der überwachten Leistungsanfrage basiert; und
wenn die Motorlast kleiner als ein vorbestimmter Grenzwert ist: Angeben in dem Signal, eine Kraftstoffmenge so einzuspritzen, dass der Motor (10) in einem Magerverbrennungszustand arbeitet; und
wenn die Motorlast größer als oder gleich dem vorbestimmten Grenzwert ist: Angeben in dem Signal, eine Kraftstoffmenge so einzuspritzen, dass der Motor (10) im Wesentlichen in einem stöchiometrischen Zustand arbeitet.

19. Verfahren zum Betreiben eines Motorsystems (1), welches einen Magermotor (10) mit aktiver Zündung und ein Abgasnachbehandlungssystem (12; 120; 220) umfasst, umfassend:
Zuführen eines Abgasstroms von dem Magermotor (10) mit aktiver Zündung durch einen Dreiwegekatalysator (TWC) (34) in dem Abgasnachbehandlungssystem (12; 120; 220), um während des Betriebs des Motors (10) unter stöchiometrischen Bedingungen Ammoniak zu erzeugen;
Speichern des Ammoniaks für eine zusätzliche NOx-Verringerung während Magerzuständen;
Zuführen des Abgases durch einen Katalysator zur selektiven katalytischen Reduktion (38) stromabwärts von dem TWC (34), wo das genannte Speichern von Ammoniak stattfindet;
**gekennzeichnet durch**:
Vorsehen, dass zumindest ein Teil des Abgases den TWC (34) umgeht, wenn der Motor (10) in einem Magerverbrennungszustand arbeitet, **durch** ein erstes Ventil (65), das stromaufwärts von dem TWC (34) angeordnet ist; und
Vorsehen, dass zumindest ein Teil des Abgases den Katalysator zur selektiven katalytischen Reduktion (38) umgeht, wenn der Motor (10) in dem stöchiometrischen Zustand arbeitet, **durch** ein zweites Ventil (35), das stromaufwärts von dem Katalysator zur selektiven katalytischen Reduktion (38) angeordnet ist.

## Revendications

1. Un système moteur (1) comprenant :
un moteur à mélange pauvre à combustion interne et et à allumage actif (10) comprenant :
un bloc-moteur (13) à plusieurs cylindres,
un système de gestion de l'air incluant un collecteur d'admission (14) adapté pour approvisionner les cylindres en air de suralimentation,
un collecteur d'échappement (16),
une source d'allumage active, et
un système d'injection de carburant qui, avec le système de gestion de l'air, est adapté pour fournir un mélange de carburant du système d'injection et d'air de suralimentation du collecteur d'admission (14), de sorte qu'un rapport air/carburant du mélange air de suralimentation/carburant, dans chacun des cylindres du moteur, soit substantiellement supérieur à une quantité stcechiométrique pour atteindre les conditions d'un mélange pauvre, et
un système de post-traitement du gaz d'échappement (12 ; 120 ; 220) cognementlé de manière fluidique à une sortie du collecteur d'échappement (16), ledit système de post-traitement (12 ; 120 ; 220) incluant :
un catalyseur d'oxydation-réduction (34),
un catalyseur pour une réduction catalytique sélective (RCS) (38) cognementlé de manière fluidique au catalyseur d'oxydation-réduction (34) et positionné en aval du catalyseur d'oxydation-réduction (34),
**caractérisé en ce que**
le système moteur (1) comprend également :
une première soupape de dérivation (65) connectée de manière fluidique en amont du catalyseur d'oxydation-réduction (34), la première soupape de dérivation (65) étant contrôlable pour acheminer du gaz d'échappement de sorte à contourner, au moins en partie, le catalyseur d'oxydation-réduction (34) dans les conditions d'un mélange pauvre, et
une deuxième soupape de dérivation (35) connectée de manière fluidique en aval du catalyseur d'oxydation-réduction (34) et en amont du catalyseur pour une réduction catalytique sélective (38), la deuxième soupape de dérivation (35) étant contrôlable pour acheminer du gaz d'échappement de sorte à contourner, au moins en partie, le catalysateur pour une réduction catalytique sélective (38), dans des conditions de fonctionnement stoechiométriques.

2. Le système moteur (1) de la revendication 1, comprenant également un appareil de conversion d'énergie (18) connecté de manière fluidique à une sortie du collecteur d'échappement (16) et adapté pour convertir l'énergie d'un flux d'échappement du collecteur d'échappement (16) pour compresser l'air ambiant pour ledit air de suralimentation.

3. Le système moteur (1) de la revendication 2, tandis que l'appareil de conversion de l'énergie (18) est un turbocompresseur incluant une turbine (18), connectée de manière fluidique à une sortie du collecteur d'échappement (16) et adaptée pour tourner par le biais d'un flux d'échappement du collecteur d'échappement (16), ainsi qu'un compresseur (20) mécaniquement connecté à la turbine (18) et configuré pour fournir l'air ambiant compressé lorsque la turbine (18) tourne.

4. Le système moteur (1) de la revendication 1, comprenant également un doseur suppresseur de cognement (46), prévu sur le côté d'entrée du bloc-moteur (13), ledit doseur suppresseur de cognement (46) étant adapté pour injecter un suppresseur de cognement dans l'air de suralimentation dans une quantité suffisante pour réduire la température de fonctionnement du moteur dans lesdites conditions d'un mélange pauvre.

5. Le système moteur (1) de la revendication 4, tandis que le suppresseur de cognement est au moins un parmi : un gaz pour la recirculation d'un gaz d'échappement (EGR), un alcool, du carburant ou de l'eau.

6. Le système moteur (1) de la revendication 1, tandis que le système d'injection de carburant est soit un système d'injection de carburant directe soit un système d'injection de carburant par admission.

7. Le système moteur (1) de la revendication 1, tandis que le catalyseur d'oxydation-réduction (34) est un catalyseur à trois voies (34).

8. Le système moteur (1) de la revendication 1, comprenant également un filtre à particules (50), tandis que le catalyseur d'oxydation-réduction (34) est intégré avec le filtre à particules (50).

9. Le système moteur (1) de la revendication 1, comprenant également un contrôleur (32) qui contrôle les différentes conditions du moteur (10) ainsi que les demandes de puissance et qui est adapté pour communiquer un signal au système d'injection de carburant en réponse auxdites conditions contrôlées et/ou auxdites demandes de puissances contrôlées, tandis que ledit signal indique qu'il faut injecter une quantité de carburant de sorte que le moteur (10) fonctionne dans les conditions d'un mélange pauvre, lorsque la charge du moteur (10) est inférieure à un seuil prédéterminé, et tandis que le signal indique qu'il faut injecter une quantité de carburant de sorte que le moteur (10) fonctionne substantiellement dans des conditions stoechiométriques, lorsque la charge du moteur est supérieure au seuil prédéterminé.

10. Une méthode pour faire fonctionner un système de moteur (1) incluant un moteur à mélange pauvre à combustion interne et et à allumage actif (10) et un système de post-traitement (12 ; 120 ; 220), ledit moteur (10) incluant un bloc-moteur (13) à plusieurs cylindres, un collecteur d'admission (14) pour approvisionner les cylindres en air de suralimentation, un collecteur d'échappement (16) et au moins une source d'allumage active pour l'allumage d'un mélange d'air de suralimentation et de carburant dans chaque cylindre, tandis que ledit système de post-traitement (12 ; 120 ; 220) inclut un catalyseur d'oxydation-réduction (34) et un catalyseur (38) de réduction catalytique sélective (RCS), comprenant :
l'injection d'une quantité mesurée de carburant à haute pression dans chaque cylindre du bloc-moteur (13) pour un mélange avec l'air de suralimentation dans les cylindres de sorte que le rapport air/carburant de l'air de suralimentation mélangé au carburant soit substantiellement supérieur à une quantité stoechiométrique pour atteindre les conditions d'un mélange pauvre lors d'une combustion,
pour chaque cylindre, la combustion de l'air de suralimentation mélangé au carburant dans le cylindre lors de la mise en fonctionnement de la au moins une source d'allumage active,
la fourniture d'un flux de gaz d'échappement résultant de ladite combustion par le biais du système de post-traitement (12 ; 120 ; 220), lequel inclut le catalyseur d'oxydation-réduction (34) et le catalyseur (38) de réduction catalytique sélective (RCS), lequel est couplé de manière fluidique au catalyseur d'oxydation-réduction (34) et positionné en aval du catalyseur d'oxydation-réduction (34),
**caractérisé en ce**
**qu'**est prévue la fourniture, par le biais d'une première soupape (65) positionnée en amont du catalyseur d'oxydation-réduction (34), d'au moins une partie du gaz d'échappement pour contourner le catalyseur d'oxydation-réduction (34) si le moteur (10) fonctionne dans les conditions d'un mélange pauvre, et
la fourniture, par le biais d'une deuxième soupape (35) positionnée en amont du catalyseur de réduction catalytique sélective (38), du gaz d'échappement pour contourner le catalyseur de réduction catalytique sélective (38) si le moteur (10) fonctionne dans des conditions stoechiométriques.

11. La méthode de fonctionnement d'un moteur à mélange pauvre à combustion interne et et à allumage actif (10) selon la revendication 10, comprenant également la conversion de l'énergie du flux de gaz d'échappement pour compresser l'air ambiant pour ledit air de suralimentation.

12. La méthode pour faire fonctionner un moteur à mélange pauvre à combustion interne et à allumage actif (10) selon la revendication 10, comprenant également l'injection d'un suppresseur de cognement dans la l'air de suralimentation dans une quantité suffisante pour réduire une température de fonctionnement durant lesdites conditions d'un mélange pauvre.

13. La méthode pour faire fonctionner un moteur à mélange pauvre à combustion interne et à allumage actif (10) selon la revendication 12, tandis que l'étape de l'injection du suppresseur de cognement inclut : un contrôle de plusieurs conditions du moteur (10) et des demandes de puissance, ainsi que la réponse à la question de savoir si des conditions de fonctionnement actuelles ou requises sont des conditions de fonctionnement en mélange pauvre en présence desquelles une température de fonctionnement provoquerait un cognement du moteur.

14. La méthode pour faire fonctionner un moteur à mélange pauvre à combustion interne et à allumage actif (10) selon la revendication 12, tandis que le suppresseur de cognement est au moins un parmi : un gaz pour la recirculation d'un gaz d'échappement (EGR), un alcool, du carburant ou de l'eau.

15. La méthode pour faire fonctionner un moteur à mélange pauvre à combustion interne et à allumage actif (10) selon la revendication 10, tandis que soit le système d'injection directe soit le système d'injection de carburant par admission injecte la quantité mesurée de carburant.

16. La méthode pour faire fonctionner un moteur à mélange pauvre à combustion interne et à allumage actif (10) selon la revendication 10, tandis que le catalyseur d'oxydation-réduction (34) est un catalyseur à trois voies (34).

17. La méthode pour faire fonctionner un moteur à mélange pauvre à combustion interne et à allumage actif (10) selon la revendication 10, comprenant également le filtrage de matière particulaire du flux d'échappement dans le système de post-traitement (12 ; 120 ; 220).

18. La méthode pour faire fonctionner un moteur à mélange pauvre à combustion interne et à allumage actif (10) selon la revendication 10, comprenant également :
le contrôle des différentes conditions du moteur (10) et de demandes de puissance,
la communication d'un signal vers un système d'injection de carburant injectant ladite quantité mesurée de carburant, ledit signal étant basé sur lesdites conditions contrôlées et/ou lesdites demandes de puissance contrôlées, et
si la charge du moteur est inférieure à un seuil prédéterminé : indication dans le signal qu'une quantité de carburant doit être injectée de sorte que le moteur (10) fonctionne dans des conditions de mélange pauvre, et
si la charge du moteur est supérieure ou égale au seuil prédéterminé : indication dans le signal qu'une quantité de carburant doit être injectée de sorte que le moteur (10) fonctionne substantiellement dans des conditions stoechiométriques.

19. Une méthode pour faire fonctionner un système de moteurs (1) incluant un moteur à mélange pauvre à combustion interne et à allumage actif (10) et un système de post-traitement (12 ; 120 ; 220), comprenant :
la fourniture de gaz d'échappement à partir du moteur à mélange pauvre à combustion interne et à allumage actif (10) par le biais d'un catalyseur à trois voies (CTV) (34) dans le système de post-traitement (12 ; 120 ; 220) pour produire de l'ammoniac durant le fonctionnement du moteur (10) dans des conditions stoechiométriques,
le stockage de l'ammoniac pour une réduction additionnelle de Nox durant des conditions de mélange pauvre,
la fourniture du gaz d'échappement par le biais d'un catalyseur de réduction catalytique sélective (38) en aval du CTV (34), où est effectué ledit stockage de l'ammoniac,
**caractérisée en ce**
**qu'**est prévue la fourniture, par le biais d'une première soupape (65) positionné en amont du CTV (34), d'au moins une partie du gaz d'échappement pour contourner le CTV (34) si le moteur (10) fonctionne dans des conditions de mélange pauvre, et
la fourniture, par le biais d'une deuxième soupape (35) positionnée en aval du catalyseur de réduction catalytique sélective (38), d'au moins une partie du gaz d'échappement pour contourner le catalyseur de réduction catalytique sélective (38) si le moteur (10) fonctionne dans les conditions stoechiométriques.
